# EUROPÄISCHE PATENTANMELDUNG

(11) **EP 2 719 618 A1**
(43) Veröffentlichungstag der Anmeldung: **16.04.2014**
(21) Anmeldenummer: 13185900.1
(22) Anmeldetag: 25.09.2013
(51) Int. Cl.: B64C 1/06

(54) **Rumpfstrukturbauteil für Fahrzeuge, insbesondere für Luft- und/oder Raumfahrzeuge**

(30) Priorität: 10.10.2012 DE 102012019905
(71) Anmelder: Deutsches Zentrum für Luft- und Raumfahrt e.V., 51147 Köln (DE)
(72) Erfinder: Kolesnikov, Boris, 38104 Braunschweig (DE); Hühne, Christian, 30173 Hannover (DE); Niemann, Steffen, 38440 Wolfsburg (DE); Lohse-Busch, Heike, 38100 Braunschweig (DE); Mierheim, Olaf, 38114 Braunschweig (DE)
(74) Vertreter: Einsel, Martin

(57) **Zusammenfassung**

Ein Rumpfstrukturbauteil für Fahrzeuge besitzt eine tragende Innenhaut (10). Ferner weist sie eine konzentrisch dazu angeordnete nicht tragende Außenhaut (20). Auf der Innenseite (11) der Innenhaut (10) sind Spanten (30) angeordnet. Auf der Außenseite (12) der Innenhaut (10) sind Stringer (41) einer ersten Stringerschar angeordnet. Diese Stringer (41) sind in jedem Abwicklungsbereich der Innenhaut (10) im gleichen Winkel (ϕ) zur Rumpflängsachse (15) angeordnet. Eine zweite Schar von Stringern (42) ist auf der Innenseite (11) der Innenhaut (10) angeordnet. Die Stringer (42) der zweiten Schar sind in jedem Abwicklungsbereich der Innenhaut (10) in dem gleichen Winkel (-ϕ) zur Rumpflängsachse (15) angeordnet. Die von der Schar der ersten Stringer (41) mit der Rumpflängsachse (15) und die von der Schar der zweiten Stringer (42) mit der Rumpflängsachse (15) eingeschlossenen Winkel (ϕ, -ϕ) sind gleich groß, jedoch symmetrisch einander entgegengesetzt.

## Beschreibung

Die Erfindung betrifft ein Rumpfstrukturbauteil für Fahrzeuge, insbesondere für Luft- und/oder Raumfahrzeuge, mit einer tragenden Innenhaut, die eine Innenseite und eine Außenseite sowie eine Rumpflängsachse aufweist, mit einer um die Innenhaut angeordneten nichttragenden Außenhaut, die eine Innenseite und eine Außenseite aufweist, mit auf der Innenseite der Innenhaut angeordneten Spanten, mit auf der Außenseite der Innenhaut angeordneten Stringern, und mit einem zwischen der Innenhaut und der Außenhaut angeordneten und die beiden Häute miteinander verbindenden Kern.

Fahrzeuge insbesondere für die Luft- und Raumfahrt, beispielsweise für Flugzeuge, werden unter Verwendung von Rümpfen hergestellt, die ihrerseits aus einem oder mehreren Rumpfstrukturbauteilen aufgebaut sind. Diese Rumpfstrukturbauteile müssen unterschiedliche Aufgaben erfüllen, beispielsweise weitere Bauelemente wie etwa Flugzeugflügel tragen und Schutz gegenüber äußeren Einflüssen bieten.

Durchgesetzt in der Praxis hat sich dabei eine Semimonocoque-Bauweise. Diese gehört zu einer bewährten Leichtbautechnik. Ein Flugzeugrumpf weist dabei Rumpfstrukturbauteile auf, die eine Haut besitzen. Diese Haut besitzt eine auf einer Innenseite der Haut angeordnete Stringerschar mit zur Rumpflängsachse parallelen Stringern und eine auf dieser Hautseite angeordnete Spantenschar mit zur Rumpflängsachse senkrechten Spantenebenen. Es entsteht so eine Haut mit Hautfeldern, die in etwa quadratisch oder rechteckig sind. Es sind bereits viele Vorschläge unterbreitet worden, um die Tragfähigkeit der Strukturen zu verbessern oder die Gewichte zu verringern.

Einige dieser Ideen bestehen darin, zwei Scharen von Stringern einzusetzen, die sich zusätzlich zu den Spanten sowohl mit den Spanten als auch mit den anderen Stringern kreuzen und auf diese Weise zu komplexer gebildeten Hautfeldern und zu einer größeren Versteifung und mehr Kreuzungspunkten führen. Durch dabei entstehende dreieckige Hautfelder kann die Beulspannung der Haut erhöht werden. Auf diese Weise wird dann wiederum die Tragfähigkeit der Haut und somit des Rumpstrukturbauteils insgesamt bei Druck- und Schubbeanspruchungen erhöht.

Derartige Vorschläge sind beispielsweise aus der US-PS 6,068,902 und der DE 10 2009 056 996 A1 sowie der DE 10 2009 056 998 A1 bekannt. Die Anzahl der Kreuzungspunkte in diesen Strukturen ist wesentlich höher als bei Strukturen in konventionellen Semimonocoque-Bauweisen mit überwiegend parallel angeordneten Stringern. Es entsteht eine Vielzahl von mehrfach unterbrochenen Stringern und ebenso eine Vielzahl von Verbindungselementen in den Kreuzungsbereichen der Stringer.

Die Haut-Beulspannung wird zwar bei solchen Konzepten erhöht, dafür wird jedoch einerseits die strukturmechanische Gerechtigkeit oder "Die Strukturmechanik" durch die Vielzahl von Unterbrechungen beeinträchtigt und andererseits auch der Zusammenbauaufwand erhöht. Auch das Gewicht und die Kosten der Bauteile steigen bei diesen Konzepten trotz der an sich erstrebenswerten Ziele.

Das Umkoppeln der Stringer in den Kreuzungsbereichen führt zu dem Erfordernis, recht komplexe und zusätzliches Gewicht erfordernde Verbindungselemente entwerfen zu müssen, die die oben erwähnten Nachteile vermeiden helfen, aber neue Nachteile durch zusätzliches Gewicht und Mehraufwand schaffen.

Darüber hinaus entstehen außerhalb der Kreuzungsbereiche jetzt andere Faservolumenanteile als in den Kreuzungsbereichen, was ebenfalls nicht optimal ist. Die gewickelten gitterförmigen Strukturen weisen auf diese Weise nicht die Merkmale auf, welche zu optimalen Eigenschaften führen, und zwar sowohl innerhalb wie auch außerhalb der Kreuzungsbereiche. Dadurch werden nun auch wiederum die Leichtbaukriterien und die Gewichtsvorteile beeinträchtigt, die an sich durch den Einsatz von kohlenstofffaserverstärkten Verbundwerkstoffen möglich werden.

Aus der US 2012/0248247 A1 ist ein Vorschlag für einen Rumpf eines Luftfahrzeuges bekannt, bei dem mehrere Rahmen senkrecht zur Längsachse des Rumpfes angeordnet und zudem mehrere Stringer in Längsrichtung vorgesehen sind. Die Stringer sind so aufgebaut, dass sie einen geschlossenen Querabschnitt mit einer Hutformation bilden. Darüber hinaus ist eine Haut vorgesehen.

Ein anderer Weg ist aus der DE 10 2007 061 429 A1 bekannt. Hier wird eine Rumpfstruktur zum Einsatz insbesondere in einem Luft- oder Raumfahrzeug vorgeschlagen, welche eine Außenhaut und Strukturbauteile aufweist, die mit der Außenhaut verbunden sind, sowie eine Innenverkleidung, die mit der Außenhaut und den Strukturbauteilen eine tragende Struktur bildet.

Neben der vorstehend diskutierten Tragfähigkeit derartiger Strukturen sind auch andere Randbedingungen relevant. Werden derartige Rumpfstrukturbauteile etwa im Flugzeugbau eingesetzt, so ist zu berücksichtigen, dass auf der Innenseite des Rumpfstrukturbauteils Personen oder Fracht sich befinden und daher dort eine bestimmte Klimatisierung und Atmosphäre zu berücksichtigen ist, während außerhalb eine verhältnismäßig dünne Atmosphäre vorhanden ist. Es ist dann unter anderem an eine Wärmedämmung zu denken, die herkömmlich auf der Innenseite der Innenhaut angebracht wird. Hier entstehen nun Probleme, wenn diese Wärmedämmung luftumspült ist, insbesondere Kontaktflächen, an denen sich Kondenswasser bilden kann.

Aus der DE 10 2007 003 278 A1 ist ein Vorschlag bekannt, der hier Abhilfe schaffen soll. Es wird vorgeschlagen, nicht nur eine Haut, sondern eine Innenhaut und eine diese umgebende Außenhaut vorzusehen. Die Innenhaut bildet dabei eine tragende Schale. Auf ihr sind sowohl die Stringerschar als auch die Spantenschar angebracht. Der besondere Vorzug der Konzeption soll nach dem dortigen Vorschlag dadurch erreicht werden, dass zwischen der Innenhaut und der zusätzlichen Außenhaut eine Schaumstoffschicht angeordnet ist. Diese Schaumstoffschicht soll als Wärmedämmung dienen.

Gegenüber herkömmlichen Strukturbauelementen für die Rümpfe von Flugzeugen hat dies den Vorteil, dass die Wärmedämmung nicht innerhalb der Innenhaut erfolgt, was zu einer Luftumspülung der Wärmedämmung und damit zu einer erheblichen Kondensbildung der Luftfeuchtigkeit im Flugzeuginneren an den Häuten führen würde, die unerwünscht ist. Dies kann durch die erwähnte Schaumstoffschicht reduziert werden. Diesem Vorteil steht nun wieder der Nachteil der geringeren Tragfähigkeit aufgrund der nur rechteckigen Hautfelder gegenüber.

Aufgabe der vorliegenden Erfindung ist es demgegenüber, einen Vorschlag für eine stabilere Konzeption für Rumpfstrukturbauteile vorzuschlagen.

Diese Aufgabe wird mittels der Erfindung bei einem gattungsgemäßen Rumpfstrukturbauteil dadurch gelöst, dass die auf der Außenseite der Innenhaut angeordneten Stringer eine erste Stringerschar bilden, dass alle Stringer der ersten Stringerschar in jedem Abwicklungsbereich der Innenhaut den im Wesentlichen gleichen Winkel (ϕ) zur Rumpflängsachse aufweisen, dass eine zweite Schar von Stringern vorgesehen ist, dass die Stringer der zweiten Stringerschar auf der Innenseite der Innenhaut angeordnet ist, dass alle Stringer der zweiten Stringerschar in jedem Abwicklungsbereich der Innenhaut den im Wesentlichen gleichen Winkel (-ϕ) zur Rumpflängsachse aufweisen, dass die von der Schar der ersten Stringer mit der Rumpflängsachse und die von der Schar der zweiten Stringer mit der Rumpflängsachse eingeschlossenen Winkel (ϕ, -ϕ) gleich groß, jedoch symmetrisch einander entgegengesetzt sind, und dass die von der Schar der ersten Stringer mit der Rumpflängsachse und die von der Schar der zweiten Stringer mit der Rumpflängsachse eingeschlossenen Winkel (ϕ, -ϕ) weniger als ±20° betragen.

Mit diesem Konzept werden in überraschend einfacher Form die angesprochenen Probleme gelöst. Zunächst wird es ähnlich, wie in der US-PS 6,068,902 und der DE 10 2009 056 996 A1 möglich, komplexere Hautfeldformen vorzusehen, beispielsweise also dreieckige, trapezförmige oder hexaedrische Hautfelder.

Das bedeutet, dass die mit den erwähnten Konzepten erreichbaren Vorteile der höheren Stabilität der Haut ebenfalls erreicht werden.

Die im Stand der Technik bestehenden Nachteile dagegen müssen nicht in Kauf genommen werden. Die beiden eingesetzten Scharen von Stringern weisen zwar einen Winkel zueinander auf, schneiden sich aber gleichwohl nicht, da sie sich auf verschiedenen Seiten der Innenhaut befinden.

Es gibt damit zwar noch Kreuzungspunkte der Spanten mit einer der beiden Stringerscharen, diese sind aber auch im herkömmlichen Rumpfstrukturbauwesen so vorhanden und der Praktiker weiß, wie er mit dieser Sorte von Kreuzungspunkten umzugehen hat. Dabei kommt ihm entgegen, dass üblicherweise die Spanten sehr viel höher ausgebildet sind als die Stringer, sodass keine Umkopplung erforderlich ist, um die Spanten ebenso ungehindert durch die Kreuzungspunkte zu führen, wie die Stringer.

Die beiden Stringerscharen greifen jetzt also auf verschiedenen Seiten der tragenden Innenhaut an, was aber an der entstehenden Stabilität durch die andere Form der Hautfelder im Vergleich zu einer Anordnung auf der gleichen Seite nichts ändert.

Darüber hinaus kann nun auch noch durch die unabhängig voneinander laufenden beiden Scharen von Stringern frei gewählt werden, welche Faservolumenanteile an welchen Stellen anfallen und wie die einzelnen Elemente des Rumpfstrukturbauteils aufgebaut werden sollen. Es ist jetzt also möglich, einen Faservolumenanteil vom beispielsweise 60 % zu wählen, was bei sich kreuzenden Stringern nicht möglich gewesen wäre. V. V. Vasiliev, V. A. Barynin und A. F. Razin haben in "Anisogrid composite lattice structures - Development and aerospace applications", in: Composite Structures 94 (2012), 1117-1127 darauf hingewiesen, dass sich bei sich schneidenden Rippen Faservolumenanteile von 75 % an den Kreuzungspunkten und von 40 % zwischen diesen Punkten ergeben, um einen Kompromiss zu erhalten. Damit liegt also weder in noch außerhalb der Kreuzungspunkte ein optimaler Wert vor. Diesen Nachteil vermeidet die Erfindung sehr elegant.

Bevorzugt weisen alle Stringer der ersten Stringerschar in jedem Abwicklungsbereich der Innenhaut den gleichen Winkel zur Rumpflängsachse auf. Dadurch wird das Verhalten zusätzlich optimiert. Die Abweichungen der Winkel voneinander sollten nach Möglichkeit gering sein und eine Toleranz von beispielsweise ± 5% bezogen auf den Abweichungswinkel von der Rumpflängsachse besitzen.

Das Gleiche gilt für die Stringer der zweiten Stringerschar, die ebenfalls alle nach Möglichkeit den gleichen Winkel zur Rumpflängsachse einschließen sollten. Auch hier wäre eine Abweichung von weniger als ± 5% gewünscht.

Bevorzugt besteht die tragende Innenhaut aus kohlenstofffaserverstärkten Verbundwerkstoffen.

Besonders bevorzugt ist es, wenn die Winkel (ϕ, - ϕ) zwischen den Scharen der ersten und zweiten Stringer und der Rumpflängsachse auf den Abwicklungsbereichen der Innenhaut weniger als ±10° betragen.

Wie sich gezeigt hat, sind in Berechnungen und virtuellen Tests diese Winkel günstig für die erwünschte Ausbildung der Hautfelder für eine besonders stabile und tragfähige Konzeption des Rumpfstrukturbauteils. Abhängig von dem Belastungsniveau deuten sich Werte von etwa ±6° als besonders günstig an.

Die Anordnung der beiden Stringer hinsichtlich der Rumpflängsachse eines beispielsweise zylindrischen Rumpfes ist bei Winkeln ± ϕ von unter 20° deutlich vorteilhafter im Vergleich zu höheren Winkeln. Dies gilt verstärkt bei Winkeln unter ± 10°. Einerseits wird die Länge der einzelnen Stringer im Verhältnis zu den herkömmlichen, parallel zur Rumpflängsachse angeordneten Stringern nur geringfügig bei kleineren Winkeln verlängert, andererseits sind auch die Vergrößerungsfaktoren für die Normalspannungen, die um den Faktor 1/cos²ϕ steigend, nur unwesentlich größer als 1. Relativ zu diesen geringfügig ungünstiger werdenden Werten sind die erzielbaren Vorteile dagegen deutlich. Und auch mit diesen kleinen Winkeln von weniger als 20° lassen sich alle erzielbaren Vorteile mit dreieckigen, trapezförmigen und hexaedrischen Hautfeldern erzielen.

Der erwähnte Wärmedämmeffekt kann insbesondere dadurch erreicht werden, dass zwischen der Innenhaut und der Außenhaut die dort angeordneten Stringer in einer Schaumstoffschicht eingebettet sind, die den Kern bildet. Der Kern erfüllt in einer solchen Konstruktion mehrere Aufgaben. Zum Einen befestigt er die nicht tragende Außenhaut an der tragenden Innenhaut und sorgt auf diese Weise auch mit für die Form der entstehenden Gesamtstruktur. Zum Anderen ist er ein Impact-Schutz gegen auftreffende Fremdteilchen, die die Außenhaut möglicherweise durchschlagen können. Außerdem trägt er auf diese Weise auch den äußeren Blitzschutz. Schließlich kommt nun noch die erwähnte Wirkung als Dämmmaterial hinzu, wenn es sich insbesondere um Schaumstoff handelt.

Der Kern ist also ein Sandwichkern zwischen Innenhaut und Außenhaut.

Das bedeutet, dass man ebenso wie in der DE 10 2007 003 278 A1 eine Wärmedämmung erreichen kann, ohne dass die Gefahr von der Bildung von Kondenswasser entsteht, jedoch aufgrund der erfindungsgemäßen Anordnung der beiden nicht parallelen und sich gleichwohl nicht kreuzenden Scharen von Stringern zusätzlich mit der oben erörterten Verbesserung der Stabilität der Gesamtstruktur und zugleich unter einer sehr günstigen Einbringung der Schaumstoffschicht in einem nicht störenden Bereich.

Ferner wird es bevorzugt, wenn die beiden Scharen der Stringer entlang der Rumpflängsachse als Auslaufmusterung der Stringer ausgebildet sind.

Durch den Einsatz einer Auslaufmusterung, also durch nicht vollständig durchlaufende Stringer, die in unterschiedlichen Spantenformationen enden, können unterschiedliche Formen für die Hautfelder gebildet werden, also je nach Auslaufmusterung dreieckige, trapezförmige oder hexaedrische.

Weiter ist es bevorzugt, wenn die tragende Innenhaut sowohl in Richtung der Rumpflängsachse als auch in Umfangsrichtung der Innenhaut eine im Wesentlichen konstante Dicke aufweist. Die Toleranz liegt dabei bevorzugt unter ±5 %.

Eine konstante Dicke der Innenhaut vereinfacht die Herstellung, reduziert somit den Fertigungsaufwand und die Kosten. Außerdem vereinfacht sich auch die Berücksichtigung verschiedener Hautdicken bei den weiteren Herstellungs- und Konzeptionsschritten. In einem Fiberplacement-Wickelfertigungsprozess können Innenhäute mit konstanter Hautdicke besser verarbeitet werden.

Besonders bevorzugt ist es ferner, wenn die Stringer der beiden Stringerscharen aus Hybridlaminaten aus kohlenstofffaserverstärkten Verbundwerkstoffen und Metallen bestehen, wobei bevorzugt die Schichten aus kohlenstofffaserverstärkten Verbundwerkstoffen zum überwiegenden Anteil aus Schichten aufgebaut sind, die in Richtung der Achse der Stringer ausgerichtete unidirektionale Fasern aufweisen.

Dabei ist es besonders bevorzugt, wenn Werkstoffe, wie etwa in der DE 10 2010 035 324 A1 verwendet werden, die beispielsweise ohne sehr kostspielige Titanfolien auskommen.

Die erfindungsgemäßen Rumpfstrukturbauteile sind insbesondere bei einem Einsatz in den Rümpfen von Fahrzeugen, speziell von Flugzeugen oder in anderen Bereichen der Luft- und/oder Raumfahrzeugtechnik von großem Vorteil einsetzbar.

Durch die verwendeten Konzepte wird auch die Reparierbarkeit entsprechender Rumpfstrukturbauteile (Stringer) verbessert. Da die Stringer jetzt nicht mehr nur aus unidirektionalen Faserverbundwerkstoffen bestehen, kann bei solchen Reparaturen eine Bolzenverbindungstechnik sehr effektiv eingesetzt werden, die besonders weit verbreitet, damit gut einsetzbar und auch sicher ist. Dies ist nicht nur, aber insbesondere auch eine wichtige Anforderung bei Passagierflugzeugen.

Die entstehenden Rumpfstrukturbauteile besitzen eine insgesamt betrachtet verbesserte Schadentoleranz gegen Impact. Dadurch wird auch die Zuverlässigkeit der entsprechenden Bauteile und die Flugsichersicherheit für die Passagiere erhöht.

Dabei ist zu berücksichtigen, dass Flugzeugrümpfe durch Biegemoment, Querkraft und Torsionsmoment beansprucht werden. Die Rümpfe von Passagierflugzeugen sind dabei zusätzlich auch einer Innendruckbelastung ausgesetzt. Die Hauptbelastung für Flugzeugrümpfe ist allerdings eine Biegemomentbeanspruchung. Die erfindungsgemäße Konstruktion der Rumpfstrukturbauteile mit den beiden Häuten und den beiden Stringerscharen sowie den Spanten ist verantwortlich und in der Lage, eine derartige Biegebeanspruchung besonders gut aufnehmen zu können.

Grundsätzlich kommt ein derartiger Aufbau von Rumpfstrukturbauteilen aber auch für den Einsatz etwa bei Eisenbahnwagen im Waggonbau oder auch im Schiffbau in Betracht.

Weitere bevorzugte Merkmale oder Eigenschaften der Erfindung ergeben sich in den Unteransprüchen und der im Folgenden erläuterten Figurenbeschreibung.

Im Folgenden werden anhand der Zeichnung drei Ausführungsbeispiele der Erfindung näher beschrieben. Es zeigen:
- **Figur 1**: einen Querschnitt durch eine Rumpfstruktur gemäß einer ersten Ausführungsform der Erfindung;
- **Figur 2**: eine Axonometrie-Darstellung der Ausführungsform aus Figur 1;
- **Figur 3**: eine schematische Darstellung einer Abwicklung einer modifizierten Ausführungsform der Erfindung; und
- **Figur 4**: eine perspektivische Darstellung einer weiteren modifizierten Ausführungsform der Erfindung unter Weglassung einiger Schichten.

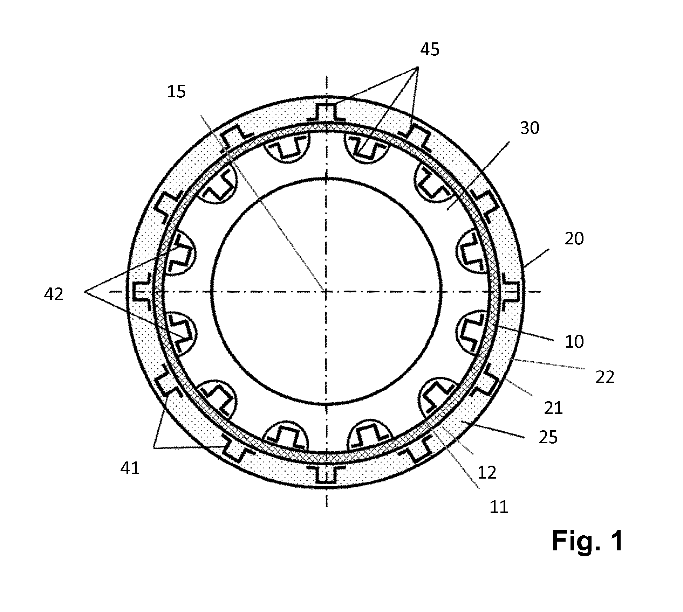

Ein in der **Figur 1** dargestellter Querschnitt durch ein Rumpfstrukturbauteil zeigt eine tragende Innenhaut 10 mit einer Innenseite 11 und einer Außenseite 12. Der schematische Querschnitt ist hier so dargestellt, dass der Schnitt durch die Innenhaut kreisförmig ist, die Innenhaut 10 selbst also konzentrisch zu einer Rumpflängsachse 15 steht, die hier senkrecht zur Blattebene gesehen wird. Andere nicht dargestellten Ausführungsformen der Erfindung arbeiten mit exzentrischen, nichtkreiszylindrischen Innenhäuten 10 für dann entsprechend aufgebaute Rumpfstrukturbauteile.

Konzentrisch zur Innenhaut 10 ist eine Außenhaut 20 zu erkennen, die ihrerseits eine Innenseite 21 und eine Außenseite 22 besitzt. Auch die Außenhaut 20 ist hier kreiszylindrisch dargestellt, kann aber entsprechend an andere Formen der Innenhaut 10 angepasst auch eine andere Struktur besitzen.

Zwischen der tragenden Innenhaut 10 und der nichttragenden Außenhaut 20 ist ein Kern 25, hier eine Schaumstoffschicht, angeordnet. Zusätzlich oder anstelle des Kernes 25 beziehungsweise der Schaumstoffschicht können auch andere oder weitere Wärmedämmschichten (nicht dargestellt) vorgesehen werden. In diesem Bereich können auch andere Elemente angeordnet werden, beispielsweise Versorgungsleitungen für Strom oder Fluide oder auch Systemelemente, wie beispielsweise Sensoren.

In Draufsicht sieht man hier auf Spanten 30. Diese Spanten liegen in oder parallel zur Blattebene und stehen mithin senkrecht auf der Rumpflängsachse 15. Sie erstrecken sich von der Innenseite 11 der Innenhaut 10 in Richtung zur Rumpflängsachse 15, stabilisieren die tragende Innenhaut 10 und halten die Rumpfform.

Senkrecht zu den Spanten 30 und ungefähr parallel zur Rumpflängsachse 15 sind auf der Außenseite 12 der Innenhaut 10 Stringer 41 einer ersten Stringerschar angeordnet.

Diese Stringer 41 sind mit in dem Kern 25, also in dem dargestellten Beispiel in der Schaumstoffschicht eingebettet.

Auf der der Rumpflängsachse 15 benachbarten Innenseite 11 der Innenhaut 10 sind Stringer 42 einer zweiten Stringerschar angeordnet, die sich in erster Näherung parallel zur Rumpflängsachse 15 erstrecken. Diese Stringer 42 der zweiten Stringerschar kreuzen sich also mit den Spanten 30. Sie sind jedoch von den ersten Stringern 41 durch die Innenhaut 10 getrennt und laufen mithin auf unterschiedlichen Seiten der Innenhaut 10.

Es gibt also bei einer Abweichung von der Parallelität keine realen Kreuzungspunkte zwischen den Stringern 41 der ersten Stringerschar und den Stringern 42 der zweiten Stringerschar, an denen sich diese gegenseitig durchdringen würden oder eine andere Form einer Über- oder Unterführung der Stringer der einen Schar über oder unter den Stringern der anderen Schar berücksichtigt werden müsste.

Man kann ferner erkennen, dass die Stringer 41 und die Stringer 42 jeweils ein hutförmiges Profil 45 besitzen. Die Basis oder "Krempe" des jeweiligen Hutes ist an der Innenseite 11 beziehungsweise Außenseite 12 der Innenhaut 10 angeordnet, während der Hutzylinder mit dem Hutdeckel der Stringer 42 der zweiten Stringerschar in Richtung zur Rumpflängsachse 15 gerichtet ist, während dieses Element des hutförmigen Profils 45 der Stringer 41 der ersten Stringerschar nach außen in Richtung der Außenhaut 20 gerichtet ist.

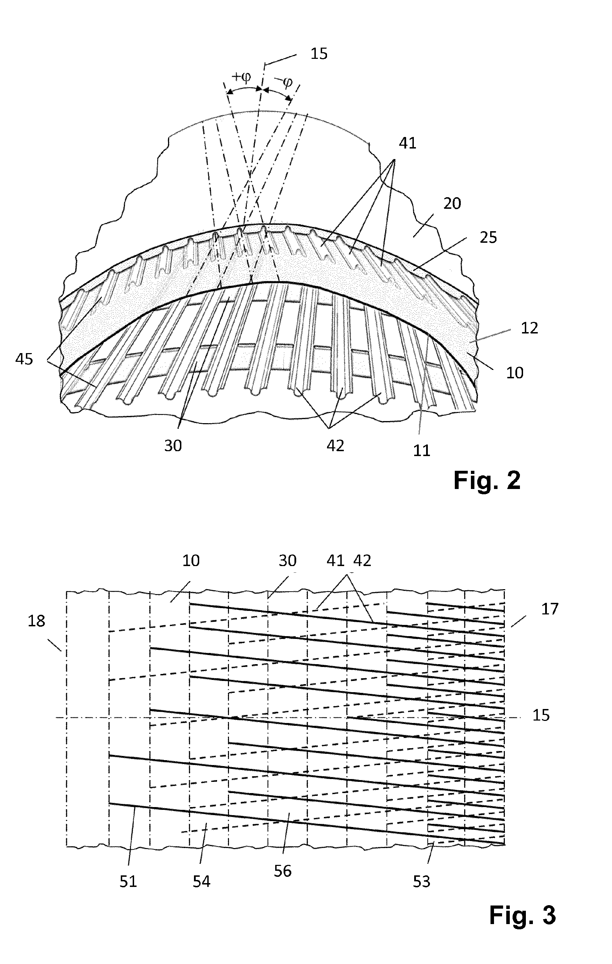

In der **Figur 2** sieht man diese Ausführungsform nun in einer Axonometrie-Darstellung. Unten in der Figur 2 sieht man die Spanten 30 beziehungsweise einen kleinen Ausschnitt dieser Spanten 30, die sich leicht gewölbt in Draufsicht zeigen. Auf diesen Spanten 30 und diese durchdringend kann man die Stringer 42 der zweiten Stringerschar sehen, wobei hier die Hutzylinder der hutförmigen Profile 45 nach unten gerichtet sind. Die Basis oder "Krempe" der hutförmigen Profile 45 der Stringer 42 sind nach oben gerichtet und liegen auf der hier unteren Innenseite 11 der tragenden Innenhaut auf. Die Innenhaut 10 ist hier teilweise weggeschnitten, damit man einen Blick auf die Spanten 30 und die Stringer 42 bekommt.

Unmittelbar auf der Außenseite 12 der Innenhaut 10 sieht man die hutförmigen Profile 45 der Stringer 41 der ersten Stringerschar. Hier sind die Hutzylinder der hutförmigen Profile 45 nach oben gerichtet.

Abgedeckt werden die Stringer 41 der ersten Stringerschar von dem Kern 25, bevorzugt also von der Schaumstoffschicht, über der sich dann die Außenhaut 20 aufspannt.

Man erkennt in der Figur 2 zusätzlich zur Figur 1, dass die Stringer 41 und die Stringer 42 zwar oberflächlich und sehr grob betrachtet parallel zur Rumpflängsachse 15 verlaufen und somit etwa senkrecht zu den Spanten 30, das bei einer genauen Betrachtung jedoch eine Abweichung der Stringer 41 und 42 von der Parallelen zur Rumpflängsachse 15 gegeben ist. Betrachtet man eine entsprechende Abwicklung, die durch Einzeichnung einer Parallelen zur Rumpflängsachse hier angedeutet ist, so zeigt sich, das jede Stringerschar eine Abweichung um einen Winkel +ϕ oder -ϕ von der Richtung der Rumpflängsachse 15 hat. Die einzelnen Stringer 41 der ersten Stringerschar sind zwar untereinander parallel, weichen jedoch um den Winkel +ϕ von der Rumpflängsachse 15 ab, während die einzelnen Stringer 42 der zweiten Stringerschar ebenfalls untereinander parallel sind, jedoch um den Winkel -ϕ von der Rumpflängsachse15 abweichen.

Vergleicht man also die Basislinien auf der tragenden Innenhaut 10, so würden sich die Basislinien tatsächlich kreuzen, nicht dagegen die Stringer 41 und 42 selbst.

Die Winkel ±ϕ der Stringer 41, 42 der beiden Stringerscharen sind im Betrag gleich und nur in der Richtung unterschiedlich. Ihre Größe beträgt weniger als ±20°, insbesondere weniger als ±10°.

Die Anordnung der Stringer 41 der ersten Stringerschar mit gleichen Winkeln +ϕ auf der Außenseite 12 der Innenhaut 10 und der Stringer 42 der zweiten Stringerschar mit gleichen Winkeln -ϕ auf der Innenseite 11 der Innenhaut 10 beseitigt die Knotenproblematik, die bei sich kreuzenden Stringern 41, 42 auftritt. Alle Stringer 41, 42 bleiben ununterbrochen und werden nicht umgekoppelt. Es sind keine Verbindungselemente in Stringerkreuzpunkten erforderlich. Eine derartige "knotenfreie" Bauweise reduziert sowohl den Zusammenbauaufwand wie auch die Montagekosten als auch das Gewicht im Vergleich zu konventionellen technischen Lösungen. Durch eine derartige "knotenfreie" Bauweise können die bevorzugt gewickelt hergestellten Rumpfstrukturbauteile mit allen weiteren Elementen wie Rippen und dergleichen eine optimalen Faservolumengehalt von ca. 60 % aufweisen, was bei sich kreuzenden und mithin umzukoppelnden Stringern nicht möglich ist. Auf diese Weise werden auch die Leichtbaukriterien besser erfüllt und erhebliche Gewichtseinsparungen erreicht.

Werden von den Stringern 41 und 42 der beiden Stringerscharen zur Rumpflängsachse 15 Winkel von ϕ = ±20° oder sogar von nur ϕ = ±10° eingehalten, betragen die Vergrößerungsfaktoren für die Stringernormalspannungen nur ca. 1,13 beziehungsweise 1,03 und für die Stringerlänge nur ca. 1,06 beziehungsweise 1,015 im Vergleich zu parallel zur Rumpflängsachse 15 angeordneten herkömmlichen Stringern.

Das bedeutet, dass der Umstand, dass die Stringer 41, 42 nicht exakt in Rumpflängsrichtung, also parallel zur Rumpflängsachse 15, verlaufen, auf die Länge und die Stringernormalspannungen nur gering ist, also kaum zusätzliche Belastungen und kaum zusätzliches Material benötigt wird.

Durch den doppelten Satz von Stringern 41 und 42, die nicht parallel zueinander und nicht parallel zur Rumpflängsachse 15 verlaufen, sondern jeweils einen Winkel von weniger als 20° mit der Rumpflängsachse 15 einschließen, lassen sich erhebliche Gewinne hinsichtlich der Stabilität der Haut erzielen im Verhältnis zu herkömmlichen Lösungen mit nur einer Stringerschar.

In der Figur 3 ist ein Bereich einer Abwicklung des Rumpfstrukturbauteils schematisch dargestellt. Es kann sich um ein Rumpfstrukturbauteil aus den Figuren 1 oder 2 handeln, aber auch um eine alternative andere Ausführungsform. Der Kern 25 beziehungsweise die Schaumstoffschicht und die Außenhaut 20 sind jeweils weggelassen.

Man sieht flächig dargestellt die Innenhaut 10, und zwar zwischen einem ersten Rumpfquerschnitt 17 und einem zweiten Rumpfquerschnitt 18. Die Ansicht ist gedacht von der Außenseite 12 der Innenhaut 10 her betrachtet.

Das bedeutet, dass man die parallel zu den beiden Rumpfquerschnitten 17, 18 verlaufenden Spanten 30 jeweils durch die Innenhaut 10 verdeckt sieht. Sie sind strichliniert dargestellt. Die Spanten 30 weisen voneinander jeweils den gleichen Abstand auf. Zwischen dem ersten Rumpfquerschnitt 17 und dem zweiten Rumpfquerschnitt 18 befinden sich in der Darstellung mithin zehn derartige Spanten 30. Natürlich können die Rumpfstrukturbauteile auch wesentlich mehr Spanten 30 oder auch weniger Spanten 30 aufweisen und auch die Verhältnisse von Länge zu Umfang können andere sein. Dargestellt ist auch nur eine schematische, ausgerissene Fläche.

Verdeckt dargestellt ist auch die Rumpflängsachse 15, da sie aus der Sicht des Betrachters hinter der Innenhaut 10 liegen würde.

Die ersten Stringer beziehungsweise die Stringer 41 der ersten Stringerschar befinden sich auf der Außenseite 12 der Innenhaut 10 und sind mithin durchgezogen dargestellt.

Die zweiten Stringer oder Stringer 42 der zweiten Stringerschar befinden sich auf der Innenseite 11 der Innenhaut 10 und mithin für den Betrachter hinter der Innenhaut 10 und sind gestrichelt dargestellt.

Man kann wiederum gut erkennen, dass auf dieser Abwicklung die Stringer 41 und Stringer 42 jeweils untereinander parallel sind, die Stringer der jeweiligen Stringerscharen jedoch mit der Rumpflängsachse 15 einen Winkel aufweisen, wobei diese Winkel betragsmäßig gleich groß sind, jedoch in entgegengesetzte Richtung zeigen.

Man sieht ferner, dass die Stringer 41, 42 eine Auslaufmusterung 51 bilden, also ausgehend von dem ersten Rumpfquerschnitt 17 in Richtung des zweiten Rumpfquerschnitts 18 nacheinander auslaufen und nur bis zu jeweils vorgegebenen Spanten 30 führen und dort enden.

Auf diese Weise bilden die Stringer 41, 42 miteinander und mit den Spanten 30 Hautfelder, nämlich Flächenbereiche der tragenden Innenhaut 10 zwischen den jeweils die Innenhaut 10 verstärkenden Elementen, nämlich den entweder auf der Innenseite 11 oder der Außenseite 12 der Innenhaut 10 verlaufenden Spanten 30, ersten Stringern 41 und zweiten Stringern 42.

Diese Hautfelder sind an einigen Beispielen näher markiert. Man sieht, dass es sich um dreieckige Hautfelder 53, trapezförmige Hautfelder 54 und schließlich hexaedrische Hautfelder 56 handelt, je nach dem aktuellen Verlauf der Auslaufmusterung 51.

Die tragende Innenhaut 10 kann beispielsweise aus kohlenstofffaserverstärkten Verbundwerkstoffen, sogenannten CFK-Werkstoffen, bestehen. Eine als Beispiel mittels der Finite-Elemente-Methode (FEM) durchgerechnete Schale aus Rumpfstrukturbauteilen mit Winkeln der Stringer 41, 42 zur Rumpflängsachse 15 von ϕ = ± 6°, mit einer Dicke der tragenden Innenhaut 10 von 2,75 mm, mit einem Hautlaminataufbau aus kohlenstofffaserverstärkten Verbundwerkstoffen mit Anteilen von 36,4 / 54,5 / 9,1 bei Schichtenorientierungen von 0° / ±45° / 90° und mit einem Abstand der Spanten 30 voneinander von 500 mm weist die Innenhaut 10 höhere Druck-/Schubbeulspannungen bis zu einem Faktor von 1,87 / 2,15 im Vergleich zu einer Haut mit entsprechend verstärkten konventionellen rechteckigen Hautfeldern für parallel angeordnete Stringer auf. Der Abstand der Stringer 41, 42 für das gitterförmige Stringersystem aus der Figur 3 mit Winkeln von ϕ = ± 6° ist hier mit einem Faktor von k = Kosinus von 6° = 0,9945 kleiner als der entsprechende Abstand für ein nur parallel angeordnetes Stringersystem. Die Vergrößerungsfaktoren für die Stringernormalspannungen und für die Stringerlänge betragen aber in diesem Falle nur ca. 1,011 beziehungsweise ca. 1,0055 im Vergleich zu den nur parallel angeordneten Stringern. Dadurch wird im Endeffekt eine positive Bilanz für eine Gewichtseinsparung von druckbeanspruchten Paneelen mit dem Stringersystem mit einer gitterförmigen Anordnung von Stringern bei ± 6° im Vergleich zu Paneelen mit einem parallel angeordneten Stringersystem erreicht. Die Gewichtsvorteile von gitterförmigen Referenz-Stringersystemen mit großen Stringerwinkeln von ϕ = ± 25° bis 45° werden dagegen durch höhere Vergrößerungsfaktoren für die Stringernormalspannungen und Stringerlängen im Vergleich zum konventionellen parallelen Stringersystem stark reduziert, nivelliert oder können sogar negativ sein.

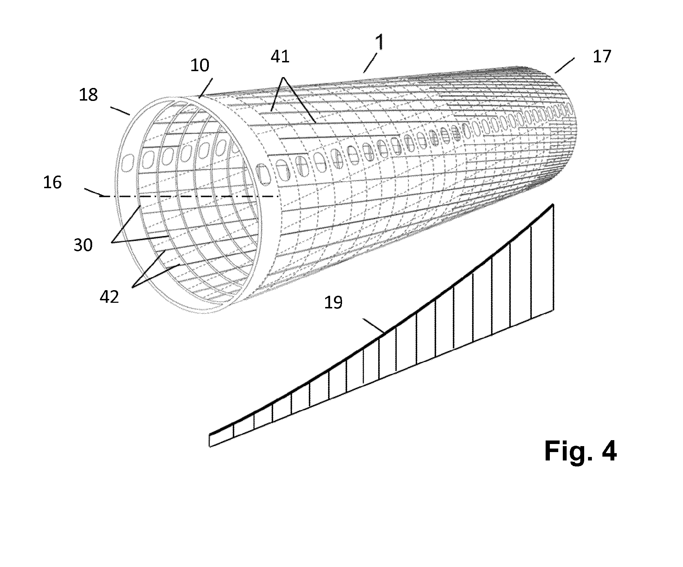

In der **Figur 4** ist ein Rumpfstrukturbauteil in Tonnenform ohne eine nicht tragende Außenhaut 20 und ohne eine Schaumstoffschicht 25 dargestellt. Die Darstellung ist perspektivisch, um die tonnenförmige Gesamtstruktur des Rumpfstrukturbauteiles besonders gut zeigen zu können.

Neben dem Rumpfstrukturbauteil ist eine Biegemomentlinie 19 gezeigt. Ferner ist eine Rumpfquerachse 16 eingezeichnet, welche die (in Figur 4 nicht dargestellte) Rumpflängsachse 15 im Mittelpunkt der ersten und zweiten Rumpfquerschnitte 17 und 18 an den beiden Enden des dargestellten Rumpfstrukturbauteils kreuzt. Die Biegemomentlinie 19 charakterisiert eine Biegebeanspruchung bezüglich dieser Rumpfquerachse 16 als eine Hauptbelastung des Rumpfes, von dem man die tragende Innenhaut 10 mit einigen weiteren noch zu erläuternden Elementen sieht.

Die Biegemomentlinie 19 verläuft abfallend vom rechts hinten dargestellten ersten Rumpfquerschnitt 17 zum längs vorne dargestellten zweiten Rumpfquerschnitt 18.

In dieselbe Richtung ist eine Auslaufmusterung 51 der Stringer 41 und Stringer 42 der beiden Stringerscharen eingezeichnet.

Aufgrund der höheren Druck- und Schubbeulspannungen von Häuten mit dreieckigen Hautfeldern 53, trapezförmigen Hautfeldern 54 und hexaedrischen Hautfeldern 56 und aufgrund einer strukturmechanischen Anpassung der Rumpfstruktur an den Biegemomentverlauf 19 durch die Auslaufmusterung 51 der Stringer 41 und 42 kann die tragende Innenhaut 10 des Rumpfstrukturbauteils in Umfangs- und Längsrichtungen des Rumpfes eine gleiche Dicke aufweisen.

Das vereinfacht die Fertigung von Innenhäuten 10 aus kohlenstofffaserverstärkten Verbundwerkstofflaminaten, beispielsweise durch den stufenlosen kontinuierlichen hochautomatischen sogenannten Fiberplacement-Wickelprozess. Auf diese Weise werden auch die Fertigungskosten reduziert. Mögliche exzentrische Beanspruchungen der Stringer 41 und 42 aufgrund eines möglichen stufigen Hautprofiles werden weit möglichst vermieden. Das wiederum verbessert ein strukturmechanisches Klima für die Stringer 41 und 42 und liefert im Endeffekt außerdem auch noch eine Gewichtseinsparung für die Stringer 41 und 42.

Die Stringer 41, 42 können beispielsweise auch aus Hybridlaminaten aus kohlenstofffaserverstärkten Verbundwerkstoffen und Metall bestehen. Dabei weisen bevorzugt die kohlenstofffaserverstärkten Werkstoffe nur die in Achse der Stringer 41 beziehungsweise 42 ausgerichteten unidirektionalen Fasern auf. Auf diese Weise werden die höchsten strukturmechanischen Eigenschaften hinsichtlich Festigkeit und Steifigkeit der Stringer 41, 42 erreicht.

Als Metallschichten können im Vergleich zu Titanfolien deutlich billigere Stahlfolien mit Dicken von weniger als 0,075 mm eingesetzt werden. Hierfür sind Volumenanteile von weniger als 7 % möglich. Dadurch weisen diese Metalllaminate Eigenschaften hinsichtlich Festigkeit, Steifigkeit und Gewicht auf, die sehr nahe an unidirektionalen kohlenstofffaserverstärkten Verbundwerkstoffen liegen. Gleichzeitig weisen sie deutlich verbesserte Schadentoleranzeigenschaften gegenüber Impact auf. Die Halbzeuge für die Stringer 41, 42 aus unidirektionalen kohlenstofffaserverstärkten Prepregbändern und Stahlfolien können hochautomatisiert mit der Fiberplacement-Technology in einem einfachsten flachen Formzustand gefertigt werden. Dabei besitzen diese Halbzeuge durch eine geringere Dicke und einen geringeren Volumenanteil von Metallschichten eine gute Biegeverformbarkeit in senkrechter Richtung zu den Fasern. Das vereinfacht auch die Verformung von Halbzeugen für die Bildung von verschiedenen Querschnittsformen für die Stringer 41, 42 und reduziert darüber hinaus auch noch die Fertigungskosten.

Durch die Anwesenheit von Metallschichten in den Hybridlaminaten aus unidirektionalen kohlenstofffaserverstärkten Kunststoffen einerseits und Metallen andererseits werden sowohl die Reparierbarkeit als auch die möglichen Ankoppelung der Stringer 41, 42 an die tragende Innenhaut 10 mittels Bolzenverbindungen im Vergleich zu Stringern 41, 42 aus reinen unidirektionalen kohlenstofffaserverstärkten Verbundwerkstoffen drastisch verbessert.

Die Stringer 41, 42 weisen bevorzugt aus Stabilitätsgründen hutförmige Profile 45 auf. Dadurch werden weitere strukturmechanische und Gewichtsvorteile erreicht.

Eine Vereinfachung der Stringerfertigung beziehungsweise eine Kostenreduzierung können durch die gleichförmigen und konstanten Stringerquerschnittsflächen und Dicken entlang der Rumpflängsachse 15 erreicht werden.

Die Außenhaut 20 besteht bevorzugt aus einem geschichteten Hybridwerkstoff. Dabei ist in einer bevorzugten Ausführungsform eine äußere Schicht dieses Hybridwerkstoffes eine Aluminiumlegierung und eine innere Schicht eine Schicht aus einem Aramidfaserverbundwerkstoff. Die äußere Schicht der Außenhaut 20 aus Aluminiumlegierung ist dann verantwortlich für einen Blitzschutz des Rumpfes aus den kohlenstofffaserverstärkten Verbundwerkstoffen. Die inneren Schichten aus Aramidfaserverbundwerkstoffen verbessern beziehungsweise übernehmen zusammen mit der Schaumstoffschicht 25 einen Impactschutz für die tragende Innenhaut 10 aus den kohlenstofffaserverstärkten Verbundwerkstoffen. Die Schaumstoffschicht 25 kann multifunktionell sein und nicht nur Schlagschutz- sondern auch Wärme- und Schalldämmung- sowie Feuerschutzeigenschaften aufweisen.

### Bezugszeichenliste

- 10: tragende Innenhaut
- 11: Innenseite der Innenhaut
- 12: Außenseite der Innenhaut
- 15: Rumpflängsachse
- 16: Rumpfquerachse
- 17: erster Rumpfquerschnitt
- 18: zweiter Rumpfquerschnitt
- 19: Biegemomentlinie

- 20: Außenhaut
- 21: Innenseite der Außenhaut
- 22: Außenseite der Außenhaut
- 25: Kern, insbesondere Schaumstoffschicht

- 30: Spanten

- 41: Stringer der ersten Stringerschar
- 42: Stringer der zweiten Stringerschar
- 45: hutförmiges Profil der Stringer

- 51: Auslaufmusterung
- 53: dreieckige Hautfelder
- 54: trapezförmige Hautfelder
- 56: hexaedrische Hautfelder

## Patentansprüche

1. Rumpfstrukturbauteil für Fahrzeuge, insbesondere für Luft- und/oder Raumfahrzeuge,
mit einer tragenden Innenhaut (10), die eine Innenseite (11) und eine Außenseite (12) sowie eine Rumpflängsachse (15) aufweist,
mit einer um die Innenhaut (10) angeordneten nichttragenden Außenhaut (20), die eine Innenseite (21) und eine Außenseite (22) aufweist,
mit auf der Innenseite (11) der Innenhaut (10) angeordneten Spanten (30), mit auf der Außenseite (12) der Innenhaut (10) angeordneten Stringern (41), und
mit einem zwischen der Innenhaut (10) und der Außenhaut (20) angeordneten und die beiden Häute (10, 20) miteinander verbindenden Kern (25),
**dadurch gekennzeichnet,**
**dass** die auf der Außenseite (12) der Innenhaut (10) angeordneten Stringer (41) eine erste Stringerschar bilden,
**dass** alle Stringer (41) der ersten Stringerschar in jedem Abwicklungsbereich der Innenhaut (10) den im Wesentlichen gleichen Winkel (ϕ) zur Rumpflängsachse (15) aufweisen,
**dass** eine zweite Schar von Stringern (42) vorgesehen ist,
**dass** die Stringer (42) der zweiten Stringerschar auf der Innenseite (11) der Innenhaut (10) angeordnet ist,
**dass** alle Stringer (42) der zweiten Stringerschar in jedem Abwicklungsbereich der Innenhaut (10) den im Wesentlichen gleichen Winkel (-ϕ) zur Rumpflängsachse (15) aufweisen,
**dass** die von der Schar der ersten Stringer (41) mit der Rumpflängsachse (15) und die von der Schar der zweiten Stringer (42) mit der Rumpflängsachse (15) eingeschlossenen Winkel (ϕ, -ϕ) gleich groß, jedoch symmetrisch einander entgegengesetzt sind, und
**dass** die von der Schar der ersten Stringer (41) mit der Rumpflängsachse (15) und die von der Schar der zweiten Stringer (42) mit der Rumpflängsachse (15) eingeschlossenen Winkel (ϕ, -ϕ) weniger als ±20° betragen.

2. Rumpfstrukturbauteil nach Anspruch 1,
**dadurch gekennzeichnet,**
**dass** die Winkel (ϕ, - ϕ) zwischen den Scharen der ersten und zweiten Stringer (41, 42) und der Rumpflängsachse (15) auf den Abwicklungsbereichen der Innenhaut (10) weniger als ±10° betragen.

3. Rumpfstrukturbauteil nach Anspruch 1 oder 2,
**dadurch gekennzeichnet,**
**dass** der Kern (25) zwischen der Innenhaut (10) und der Außenhaut (20) eine Schaumstoffschicht (25) ist, und
**dass** die dort angeordneten Stringer (41) der ersten Stringerschar darin eingebettet sind.

4. Rumpfstrukturbauteil nach einem der vorstehenden Ansprüche,
**dadurch gekennzeichnet,**
**dass** die tragende Innenhaut (10) aus kohlenstofffaserverstärkten Verbundwerkstoffen (CFK) besteht.

5. Rumpfstrukturbauteil nach einem der vorstehenden Ansprüche,
**dadurch gekennzeichnet,**
**dass** die beiden Scharen der Stringer (41, 42) entlang der Rumpflängsachse (15) als Auslaufmusterung der Stringer (41, 42) ausgebildet sind.

6. Rumpfstrukturbauteil nach einem der vorstehenden Ansprüche,
**dadurch gekennzeichnet,**
**dass** die tragende Innenhaut (10) sowohl in Richtung der Rumpflängsachse (15) als auch in Umfangsrichtung der Innenhaut (10) eine im Wesentlichen konstante Dicke aufweist.

7. Rumpfstrukturbauteil nach einem der vorstehenden Ansprüche,
**dadurch gekennzeichnet,**
**dass** die Stringer (41, 42) der beiden Stringerscharen aus Hybridlaminaten aus kohlenstofffaserverstärkten Verbundwerkstoffen und Metallen bestehen, wobei bevorzugt die Schichten aus kohlenstofffaserverstärkten Verbundwerkstoffen zum überwiegenden Anteil aus Schichten aufgebaut sind, die in Richtung der Achse der Stringer (41, 42) ausgerichtete unidirektionale Fasern aufweisen.

8. Rumpfstrukturbauteil nach Anspruch 7,
**dadurch gekennzeichnet,**
**dass** der Volumenanteil der Metallschichten an den Hybridlaminaten der Stringer (41, 42) weniger als 7 % beträgt, wobei bevorzugt die Metallschichten aus Edelstahllegierungen aufgebaut sind.

9. Rumpfstrukturbauteil nach Anspruch 7 oder 8,
**dadurch gekennzeichnet,**
**dass** die Dicke der Metallschichten des Hybridlaminates der Stringer (41, 42) geringer als 75 µm ist.

10. Rumpfstrukturbauteil nach einem der vorstehenden Ansprüche,
**dadurch gekennzeichnet,**
**dass** jeder Stringer (41, 42) entlang der Rumpflängsachse (15) eine im Wesentlichen konstante Querschnittsfläche und Dicke aufweist.

11. Rumpfstrukturbauteil nach einem der vorstehenden Ansprüche,
**dadurch gekennzeichnet,**
**dass** die überwiegende Zahl der Stringer (41, 42) einen hutförmigen Querschnitt aufweisen.

12. Rumpfstrukturbauteil nach einem der vorstehenden Ansprüche,
**dadurch gekennzeichnet,**
**dass** die Außenhaut (20) aus einem geschichteten Hybridwerkstoff besteht, wobei bevorzugt eine äußere Schicht der Außenhaut (20) eine Aluminiumlegierung und mindestens eine innere Schicht der Außenhaut (20) einen Aramidfaserverbundwerkstoff aufweist.

13. Rumpf eines Fahrzeugs, insbesondere eines Luft- und/oder Raumfahrzeugs, insbesondere eines Flugzeugs aus einem oder mehreren Rumpfstrukturbauteilen nach einem der vorstehenden Ansprüche.

14. Fahrzeug, insbesondere Luft- und/oder Raumfahrzeug, insbesondere Flugzeug, mit einem Rumpf nach Anspruch 13.
